# EUROPEAN PATENT APPLICATION

(11) **EP 4 269 040 A1**
(43) Date of publication of application: **01.11.2023**
(21) Application number: 21908473.8
(22) Date of filing: 27.05.2021
(51) Int. Cl.: B25J 9/00

(54) **ROBOT**

(30) Priority: 25.12.2020 CN 202011565508
(71) Applicant: Qkm Technology (Dong Guan) Co., Ltd, Dongguan, Guangdong 523808 (CN)
(72) Inventor: SHI, Jinbo, Dongguan, Guangdong 523808 (CN); YU, Chunhua, Dongguan, Guangdong 523808 (CN); SHA, Chi, Dongguan, Guangdong 523808 (CN); LIU, Hong, Dongguan, Guangdong 523808 (CN); CHEN, Lihui, Dongguan, Guangdong 523808 (CN); WANG, Hong, Dongguan, Guangdong 523808 (CN)
(74) Representative: Gill Jennings & Every LLP
(86) International application number: PCT/CN2021/096331
(87) International publication number: WO 2022/134462

(57) **Abstract**

Provided is a robot. The robot includes a driver controller integrated board (3) and an arm body (21). The driver controller integrated board (3) includes a control module (31), a drive module (32), and a substrate (33). The control module (31) and the drive module (32) are disposed on the substrate (33). The control module (31) is electrically connected to the drive module (32). The driver controller integrated board (3) is disposed on the arm body (21).

## Description

This application claims priority to Chinese Patent Application No. 202011565508.8 filed with the China National Intellectual Property Administration (CNIPA) on Dec. 25, 2020, the disclosure of which is incorporated herein by reference in its entirety.

### TECHNICAL FIELD

The present application relates to the technical field of robots, for example, a robot.

### BACKGROUND

Robots are a kind of cross-cutting technology product that integrates mechanical, electrical, and electronic information fields. The robots can replace humans to perform handling, assembly, loading and unloading, palletizing, welding, painting, and other work. The main components of these robots include at least a mechanical body, a reducer, an electric motor, a driver, and a controller. The controller and driver of a common robot on the market are discrete from each other, need to be mounted separately, and are all mounted on a base. The base takes up a lot of space, a lot of installation accessories are consumed, the signal transmission connection is complicated, and it is difficult to dissipate heat. In addition, this split design is difficult to satisfy a usage requirement in a narrow space.

Based on the preceding status, it is necessary to design a new robot.

### SUMMARY

The present application provides a robot so that control devices of the robot are scattered, thereby avoiding localized overheating of the robot.

A robot is provided and includes a driver controller integrated board and an arm body.

The driver controller integrated board includes a control module, a drive module, and a substrate, where the control module and the drive module are disposed on the substrate, and the control module is electrically connected to the drive module.

The driver controller integrated board is disposed on the arm body.

As an optional solution, at least one arm body is provided, the robot includes a mechanical arm, and the mechanical arm includes all the at least one arm body.

Optionally, the mechanical arm further includes an arm on which no driver controller integrated board is disposed.

As an optional solution, the driver controller integrated board further includes a first communication module, where the first communication module is electrically connected to the control module.

Optionally, the first communication module is mounted on the substrate.

Optionally, the first communication module is located between the control module and the drive module. Optionally, the first communication module is disposed near the control module.

As an optional solution, the first communication module is configured to be connected to a network.

As an optional solution, the first communication module is connected to the network in a wired or wireless manner.

As an optional solution, the control module includes a first control part and a second control part, where the first control part and the first communication module are disposed on a first side of the substrate, and the second control part and the drive module are disposed on a second side of the substrate.

Optionally, an in-board heat sink is disposed between the first side and the second side of the substrate and is capable of dissipating heat from the first control part, the second control part, the drive module, and the first communication module. Optionally, the in-board heat sink includes a cooling fin supporting the first side and the second side and a cooling fan disposed at the circumference of the substrate, where the cooling fan can improve the airflow speed inside the cooling fin, thereby improving the heat dissipation effect.

As an optional solution, the driver controller integrated board further includes an input/output (I/O) interface, where the I/O interface is electrically connected to the control module and/or the drive module.

Optionally, the I/O interface is mounted on the substrate.

As an optional solution, the driver controller integrated board further includes a heat sink, where the heat sink fits the substrate.

As an optional solution, the robot further includes a base, where the mechanical arm is movably mounted on the base.

As an optional solution, the robot further includes the driver controller integrated board mounted on the base.

Optionally, the driver controller integrated board is disposed inside or outside the base and may also be disposed inside or outside the mechanical arm.

As an optional solution, the driver controller integrated board mounted on the base is a master control board, and the driver controller integrated board mounted on the base is configured to control signals from all driver controller integrated boards and is connected to an external device signal.

As an optional solution, any driver controller integrated board is capable of acting as a master control board, and any driver controller integrated board is configured to control signals from all driver controller integrated boards and is connected to an external device signal; or all driver controller integrated boards are configured to be connected to a cloud controller, where the cloud controller is configured to control signals from all the driver controller integrated boards and is connected to an external device signal.

As an optional solution, the robot further includes a connecting plate, where the connecting plate is configured to control signals from all driver controller integrated boards and is connected to an external device signal, the connecting plate includes a control part and a mounting plate, the control part is disposed on the mounting plate, and each driver controller integrated board is electrically connected to the control part.

Optionally, the connecting plate is mounted on the base.

As an optional solution, the connecting plate further includes a second communication module, where the second communication module is disposed on the mounting plate, and the control part is electrically connected to the second communication module.

As an optional solution, the second communication module is configured to be connected to a network.

As an optional solution, the second communication module is connected to the network in a wired or wireless manner.

As an optional solution, the robot further includes a connecting seat, where the connecting seat includes a first cascade socket for the driver controller integrated board to be plugged in and a second cascade socket for the connecting plate to be plugged in, and the second cascade socket is electrically connected to the first cascade socket.

A robot is provided and includes a mechanical arm and at least one driver controller integrated board.

At least one of all the at least one driver controller integrated board is disposed on the mechanical arm, each driver controller integrated board includes a control module, a drive module, and a substrate; the control module and the drive module are disposed on the substrate, and the control module is electrically connected to the drive module.

As an optional solution, each driver controller integrated board further includes a first communication module, where the first communication module is electrically connected to the control module.

Optionally, the first communication module is mounted on the substrate.

As an optional solution, the first communication module is configured to be connected to a network.

As an optional solution, the first communication module is connected to the network in a wired or wireless manner.

As an optional solution, each driver controller integrated board further includes an I/O interface, where the I/O interface is electrically connected to the control module and/or the drive module.

Optionally, the I/O interface is mounted on the substrate.

As an optional solution, each driver controller integrated board further includes a heat sink, where the heat sink fits the substrate.

As an optional solution, the mechanical arm includes multiple arm bodies, at least two driver controller integrated boards are provided, and each of the at least two driver controller integrated boards controls at least one of the multiple arm bodies.

As an optional solution, one of the at least two driver controller integrated boards controls one of the multiple arm bodies.

As an optional solution, each driver controller integrated board is mounted on one of the multiple arm bodies controlled by the each driver controller integrated board; or each driver controller integrated board is mounted on an arm body adjacent to one of the multiple arm bodies controlled by the each driver controller integrated board.

As an optional solution, the robot further includes a base, where the mechanical arm is movably mounted on the base.

As an optional solution, at least one of all the at least two driver controller integrated boards is mounted on the base.

As another optional solution, all the driver controller integrated boards are mounted on the mechanical arm.

As an optional solution, each driver controller integrated board mounted on the base is a master control board, and each driver controller integrated board mounted on the base is configured to control signals from all the driver controller integrated boards and is connected to an external device signal.

As an optional solution, any driver controller integrated board is capable of acting as a master control board, and the master control board is configured to control signals from all the driver controller integrated boards and is connected to an external device signal; or all the driver controller integrated boards are configured to be connected to a cloud controller, where the cloud controller is configured to control signals from all the driver controller integrated boards and is connected to an external device signal.

As an optional solution, the robot further includes a connecting plate, where the connecting plate is configured to control signals from all the at least two driver controller integrated boards and is connected to an external device signal, the connecting plate includes a control part and a mounting plate, the control part is disposed on the mounting plate, and each of the at least two driver controller integrated boards is electrically connected to the control part.

Optionally, the connecting plate is mounted on the base.

As an optional solution, the connecting plate further includes a second communication module, where the second communication module is disposed on the mounting plate, and the control part is electrically connected to the second communication module.

As an optional solution, the second communication module is configured to be connected to a network.

As an optional solution, the second communication module is connected to the network in a wired or wireless manner.

As an optional solution, the robot further includes a connecting seat, where the connecting seat includes a first cascade socket for the driver controller integrated board to be plugged in and a second cascade socket for the connecting plate to be plugged in, and the second cascade socket is electrically connected to the first cascade socket.

A robot includes a mechanical arm and at least one driver controller integrated board.

At least one of all the at least one driver controller integrated board is disposed on the mechanical arm, each driver controller integrated board of the at least one driver controller integrated board includes a first substrate and a second substrate that are integrally provided, the first substrate is a control function board, the second substrate is a drive function board, and the first substrate is electrically connected to the second substrate.

As an optional solution, each driver controller integrated board further includes a first communication module, where the first communication module is electrically connected to the first substrate.

Optionally, the first communication module is mounted on the first substrate or the second substrate.

As an optional solution, the first communication module is configured to be connected to a network.

As an optional solution, the first communication module is connected to the network in a wired or wireless manner.

As an optional solution, each driver controller integrated board further includes an I/O interface, where the I/O interface is electrically connected to the first substrate and/or the second substrate.

Optionally, the I/O interface is mounted on the first substrate.

As an optional solution, each driver controller integrated board further includes a heat sink, where the heat sink fits the first substrate or the second substrate.

As an optional solution, the mechanical arm includes multiple arm bodies, at least two driver controller integrated boards are provided, and each of the at least two driver controller integrated boards controls at least one of the multiple arm bodies.

As an optional solution, one of the at least two driver controller integrated boards controls one of the multiple arm bodies.

As an optional solution, each driver controller integrated board is mounted on one of the multiple arm bodies controlled by the each driver controller integrated board; or each driver controller integrated board is mounted on an arm body adjacent to one of the multiple arm bodies controlled by the each driver controller integrated board.

As an optional solution, the robot further includes a base, where the mechanical arm is movably mounted on the base.

As an optional solution, at least one of all the at least two driver controller integrated boards is mounted on the base.

As another optional solution, all the driver controller integrated boards are mounted on the mechanical arm.

As an optional solution, each driver controller integrated board mounted on the base is a master control board, and the each driver controller integrated board mounted on the base is configured to control signals from all the at least two driver controller integrated boards and is connected to an external device signal.

As an optional solution, any driver controller integrated board is capable of acting as a master control board, and the any master control board is configured to control signals from all the driver controller integrated boards and is connected to an external device signal; or all the driver controller integrated boards are configured to be connected to a cloud controller, where the cloud controller is configured to control signals from all the driver controller integrated boards and is connected to an external device signal.

As an optional solution, the robot further includes a connecting plate, where the connecting plate is configured to control signals from all the at least two driver controller integrated boards and is connected to an external device signal; the connecting plate includes a control part and a mounting plate, the control part is disposed on the mounting plate, and each of the at least two driver controller integrated boards is electrically connected to the control part.

Optionally, the connecting plate is mounted on the base.

As an optional solution, the connecting plate further includes a second communication module, where the second communication module is disposed on the mounting plate, and the control part is electrically connected to the second communication module.

As an optional solution, the second communication module is configured to be connected to a network.

As an optional solution, the second communication module is connected to the network in a wired or wireless manner.

### BRIEF DESCRIPTION OF DRAWINGS

The present application is described below according to drawings and embodiments.
FIG. 1 is a first structural view of a robot according to an embodiment;
FIG. 2 is a structural diagram of a driver controller integrated board according to an embodiment;
FIG. 3 is another structural diagram of a driver controller integrated board according to an embodiment;
FIG. 4 is a second structural view of a robot according to an embodiment;
FIG. 5 is a structural diagram of a driver controller integrated board and a connecting plate according to an embodiment;
FIG. 6 is another structural diagram of a driver controller integrated board according to an embodiment;
FIG. 7 is a third structural view of a robot according to an embodiment; and
FIG. 8 is a fourth structural view of a robot according to an embodiment.

### Reference list

- 1: base
- 2: mechanical arm
- 21: arm body
- 211: first shaft
- 212: second shaft
- 213: third shaft
- 214: fourth shaft
- 215: fifth shaft
- 216: sixth shaft
- 3: driver controller integrated board
- 31: control module
- 311: first control part
- 312: second control part
- 32: drive module
- 33: substrate
- 34: first communication module
- 35: cooling fin
- 36: cooling fan
- 37: first substrate
- 38: second substrate
- 4: connecting plate
- 41: control part
- 42: mounting plate
- 43: second communication module
- 5: connecting seat
- 51: first cascade socket
- 52: second cascade socket

### DETAILED DESCRIPTION

Technical solutions in embodiments of the present application are described below in conjunction with the drawings. Apparently, the described embodiments are merely part, not all of the embodiments of the present application.

In the description of the present application, the terms "joined", "connected", and "fixed" are to be understood in a broad sense unless otherwise expressly specified and limited. For example, the term "connected" may refer to "fixedly connected", "detachably connected", or integrated, may refer to "mechanically connected" or "electrically connected", or may refer to "connected directly", "connected indirectly through an intermediary", "connected inside two elements", or "interaction relations between two elements". For those of ordinary skill in the art, meanings of the preceding terms in the present application may be understood based on situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

The technical solutions of the present application are described hereinafter in conjunction with drawings and embodiments.

### Embodiment one

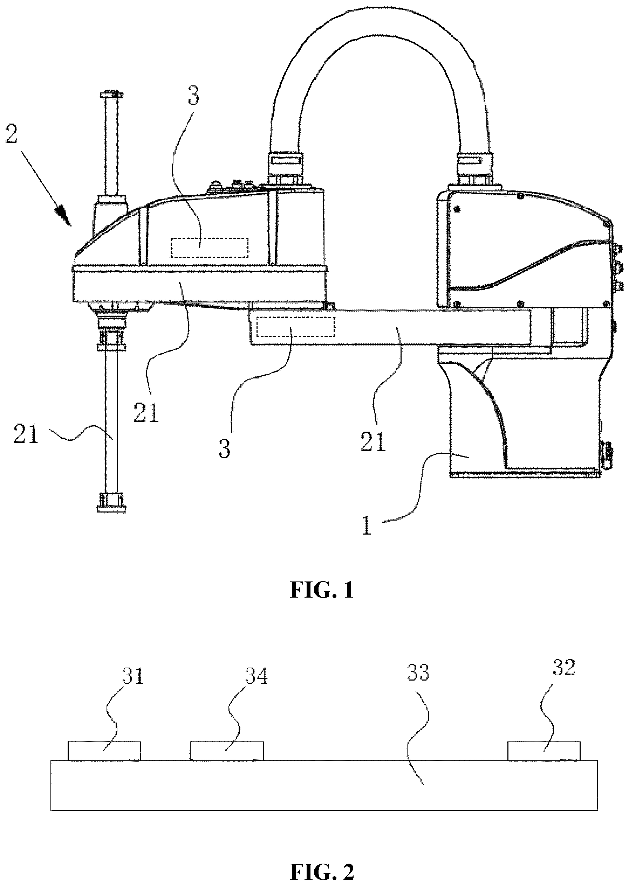

A robot is shown in FIGS. 1 and 2 (FIG. 1 is only a selective compliance assembly robot arm (SCARA) robot; in fact, this art is not limited to robots of the shape, structure, or model shown in FIG. 1, nor is it limited to the category of SCARA robots; this art may also be other categories of robots, such as a two-shaft robot, a three-shaft robot, a four-shaft robot, a five-shaft robot, a six-shaft robot, a multi-shaft robot, and a Delta robot and is applicable to a variety of shapes, structures, and models of the two-shaft robot, three-shaft robot, four-shaft robot, five-shaft robot, six-shaft robot, multi-shaft robot, and Delta robot). The robot includes driver controller integrated boards 3 and arm bodies 21. One driver controller integrated board 3 includes a control module 31, a drive module 32, and a substrate 33. The control module 31 and the drive module 32 are disposed on the substrate 33. The control module 31 is electrically connected to the drive module 32. The driver controller integrated board 3 is disposed on the arm body 21. The driver controller integrated board 3 is disposed on the arm body 21. Therefore, firstly, control devices of the robot are scattered, thereby avoiding localized overheating of the robot, ensuring the reliable operation of the robot, and improving the service life of the robot; secondly, the number of electronic devices to be accommodated in a base 1 of the robot can be reduced, the volume of the base 1 is smaller, and the robot can fit into smaller spaces; thirdly, the connection between multiple drive structures of the arm body 21 and the driver controller integrated board 3 can be simplified. The arm body 21 on which the driver controller integrated board 3 is disposed can form a standard arm structure with a control function, so as to quickly switch the arms in a mechanical arm 2. This design has a high degree of ease of use and versatility.

In this embodiment, the robot includes the mechanical arm 2, and the mechanical arm 2 includes at least one arm body 21. Optionally, the mechanical arm 2 further includes an arm on which the driver controller integrated board 3 is not disposed, that is, the mechanical arm 2 consists of the arm body 21 with the driver controller integrated board 3 and the arm without the driver controller integrated board 3, and the driver controller integrated board 3 can control the arm body 21 and the arm. Of course, in some embodiments, the mechanical arm 2 may consist of only the arm body 21 and does not include any other arms. In this case, the driver controller integrated board 3 is disposed on each arm body 21. Therefore, the driver controller integrated board 3 on each arm body 21 can control the each arm body.

Optionally, the driver controller integrated board 3 further comprises a first communication module 34, where the first communication module 34 is electrically connected to the control module 31. The first communication module 34 is provided, thereby achieving the remote connection between the control module 31 and an external device and the interaction between different driver controller integrated boards 3, and improving the use flexibility and applicability of the driver controller integrated board 3. Optionally, the first communication module 34 is mounted on the substrate 33. The first communication module 34 is located between the control module 31 and the drive module 32, and the first communication module 34 is disposed near the control module 31.

Optionally, the first communication module 34 is configured to be connected to a network. The first communication module 34 is connected to the network in a wired or wireless manner.

Optionally, the driver controller integrated board 3 further includes an I/O interface, where the I/O interface is electrically connected to the control module 31 and/or the drive module 32, and the I/O interface is mounted on the substrate 33.

Optionally, the driver controller integrated board 3 further includes a heat sink, where the heat sink fits the substrate 33.

In this embodiment, the robot further includes the base 1, and the mechanical arm 2 is movably mounted on the base 1.

Optionally, any driver controller integrated board 3 can act as a master control board, and any driver controller integrated board 3 is configured to control signals from all the driver controller integrated boards 3 and is connected to an external device signal.

Optionally, all the driver controller integrated boards 3 are connected in cascade. For example, control modules 31 of all the driver controller integrated boards are connected in cascade.

### Embodiment two

This embodiment differs from embodiment one in the aspects described below.

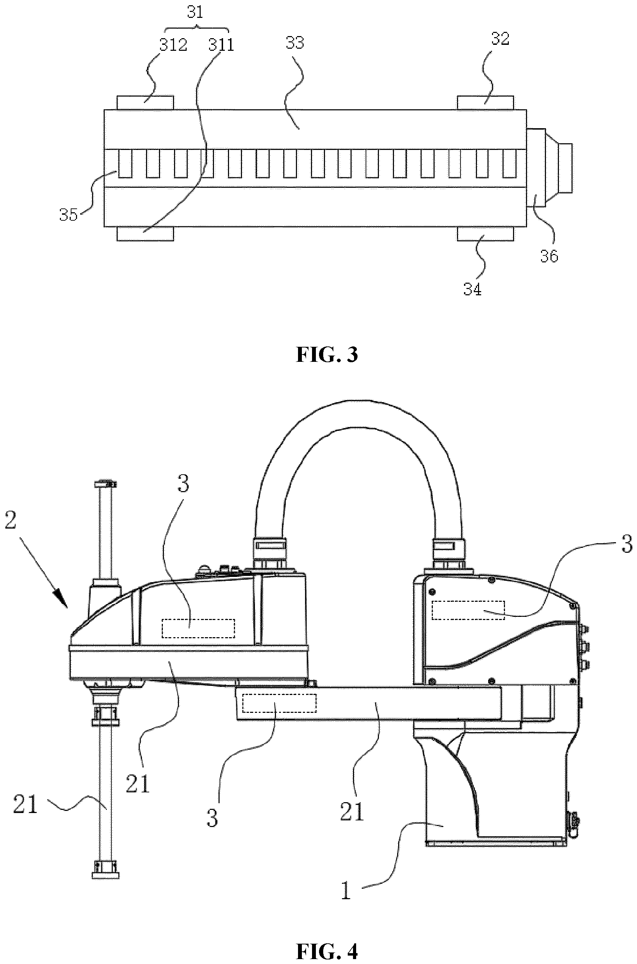

As shown in FIG. 3, the control module 31 includes a first control part 311 and a second control part 312, where the first control part 311 and the first communication module 34 are disposed on a first side of the substrate 33, and the second control part 312 and the drive module 32 are disposed on a second side of the substrate 33.

Optionally, the first control part 311 is electrically connected to the second control part 312, and the first control part 311 and/or the second control part 312 are electrically connected to the drive module 32.

Optionally, an in-board heat sink is disposed between the first side and the second side of the substrate 33 and is capable of dissipating heat from the first control part 311, the second control part 312, the drive module 32, and the first communication module 34. The in-board heat sink includes a cooling fin 35 supporting the first side and the second side and a cooling fan 36 disposed at the circumference, where the cooling fan 36 can improve the airflow speed inside the cooling fin 35, thereby improving the heat dissipation effect.

### Embodiment three

This embodiment differs from embodiment one in the aspects described below.

As shown in FIG. 4, the driver controller integrated board 3 is mounted on the base 1. The driver controller integrated board 3 is disposed inside or outside the base 1 and may also be disposed inside or outside the mechanical arm 2. If the driver controller integrated board 3 is disposed inside the base 1 or the mechanical arm 2, the driver controller integrated board 3 can be protected reliably and the service life of the driver controller integrated board 3 can be improved. If the driver controller integrated board 3 is disposed outside the base 1 or the mechanical arm 2, the convenience of maintenance and the heat dissipation performance can be improved.

Optionally, the driver controller integrated board 3 mounted on the base 1 is the master control board, and the driver controller integrated board 3 mounted on the base 1 is configured to control the signals from all the driver controller integrated boards 3 and is connected to the external device signal.

Optionally, all the driver controller integrated boards 3 are connected in cascade. For example, the control modules 31 of all the driver controller integrated boards are connected in cascade.

### Embodiment four

This embodiment differs from embodiment one in the aspects described below.

All the driver controller integrated boards 3 are configured to be connected to a cloud controller, where the cloud controller is configured to control the signals from all the driver controller integrated boards 3 and is connected to the external device signal. That is, none of the driver controller integrated board 3 in this embodiment needs to be used as the master control board, and the cloud controller is used as a master control center of the robot to achieve the overall control of the robot. This design can improve the efficiency of interaction between the arm bodies 21 of different robots and improve the efficiency and flexibility of linked operations of different robots.

### Embodiment five

This embodiment differs from embodiment one in the aspects described below.

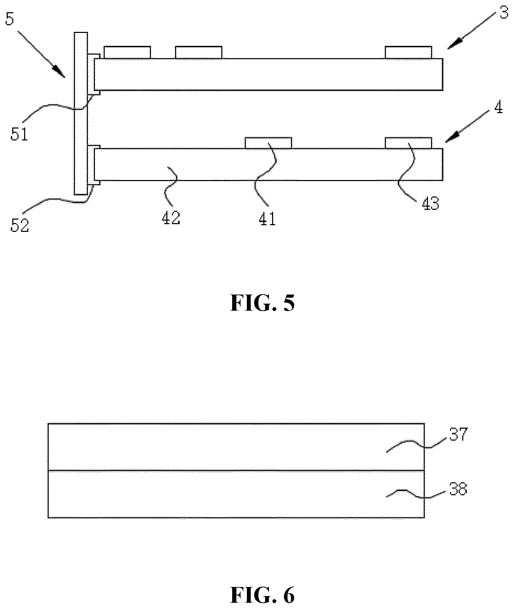

The robot further includes a connecting plate 4, where the connecting plate 4 is configured to control the signals from all the driver controller integrated boards 3 and is connected to the external device signal. As shown in FIG. 5, the connecting plate 4 includes a control part 41 and a mounting plate 42, the control part 41 is disposed on the mounting plate 42, and the driver controller integrated board 3 is electrically connected to the control part 41. The control part 41 electrically connected to the driver controller integrated board 3 is provided. Therefore, on the one hand, the total control of all the driver controller integrated boards 3 can be achieved, the signal interaction between different driver controller integrated boards 3 can be coordinated, and a control system of the robot can form a comprehensive and reliable control of an actuating part; on the other hand, the driver controller integrated board 3 can use the control part 41 as a unified external linkage control interface, thereby simplifying the overall control logic and reducing the overall design difficulty.

Optionally, the connecting plate 4 is mounted on the base 1.

In this embodiment, the connecting plate 4 further includes a second communication module 43, where the second communication module 43 is disposed on the mounting plate 42, and the control part 41 is electrically connected to the second communication module 43. The second communication module 43 is configured to be connected to the network. The second communication module 43 is connected to the network in a wired or wireless manner. The second communication module 43 can achieve remote interaction between the control part 41 and the external device, thereby improving the efficiency of interconnection between the control system of the robot and the external device.

Optionally, the robot further includes a connecting seat 5, where the connecting seat 5 includes a first cascade socket 51 for the driver controller integrated board 3 to be plugged in and a second cascade socket 52 for the connecting plate 4 to be plugged in, and the second cascade socket 52 is electrically connected to the first cascade socket 51. The connecting seat 5 with the first cascade socket 51 and the second cascade socket 52 is provided. Therefore, on the one hand, the installation reliability of the driver controller integrated board 3 and the connecting plate 4 can be improved; on the other hand, the quick assembly and disassembly of the driver controller integrated board 3, the connecting plate 4, and the connecting seat 5 can be facilitated, thereby improving the convenience and flexibility of using different driver controller integrated boards 3 and the connecting plate 4 in combination.

Optionally, all the driver controller integrated boards 3 are connected in cascade, at least one driver controller integrated panel 3 is electrically connected to the control part 41, the connecting seat 5 includes multiple first cascade sockets 51 for all the driver controller integrated boards 3 to be plugged in and one second cascade socket 52 for the connecting plate 4 to be plugged in, and the second cascade socket 52 is electrically connected to at least one first cascade socket 51.

### Embodiment six

A robot is shown in FIGS. 1 and 2 (FIG. 1 is only a SCARA robot; in fact, this art is not limited to robots of the shape, structure, or model shown in FIG. 1, nor is it limited to the category of SCARA robots; this art may also be other categories of robots, such as a two-shaft robot, a three-shaft robot, a four-shaft robot, a five-shaft robot, a six-shaft robot, a multi-shaft robot, and a Delta robot and is applicable to a variety of shapes, structures, and models of the two-shaft robot, three-shaft robot, four-shaft robot, five-shaft robot, six-shaft robot, multi-shaft robot, and Delta robot). The robot includes the mechanical arm 2 and at least one driver controller integrated board 3. At least one of the at least one driver controller integrated board 3 is disposed on the mechanical arm 2. The driver controller integrated board 3 includes the control module 31, the drive module 32, and the substrate 33. The control module 31 and the drive module 32 are disposed on the substrate 33. The control module 31 is electrically connected to the drive module 32. Part of the driver controller integrated board 3 is disposed on the mechanical arm 2. Therefore, firstly, the control devices of the robot are scattered, thereby avoiding localized overheating of the robot, ensuring the reliable operation of the robot, and improving the service life of the robot; secondly, the number of electronic devices to be accommodated in the base 1 of the robot can be reduced, the volume of the base 1 is smaller, and the robot can fit into smaller spaces; thirdly, the connection between multiple drive structures of the mechanical arm 2 and the driver controller integrated board 3 can be simplified.

Optionally, the driver controller integrated board 3 further comprises the first communication module 34, where the first communication module 34 is electrically connected to the control module 31. The first communication module 34 is provided, thereby achieving the remote connection between the control module 31 and the external device and the interaction between different driver controller integrated boards 3, and improving the use flexibility and applicability of the driver controller integrated board 3. The first communication module 34 is mounted on the substrate 33, the first communication module 34 is configured to be connected to the network, and the first communication module 34 is connected to the network in a wired or wireless manner.

Optionally, the driver controller integrated board 3 further includes an I/O interface, where the I/O interface is electrically connected to the control module 31 and/or the drive module 32, and the I/O interface is mounted on the substrate 33.

Optionally, the driver controller integrated board 3 further includes a heat sink, where the heat sink fits the substrate 33.

In this embodiment, the mechanical arm 2 includes multiple arm bodies 21, more than two driver controller integrated boards 3 are provided, and each driver controller integrated board 3 controls at least one arm body 21. Optionally, one driver controller integrated board 3 controls one arm body 21.

Optionally, all the driver controller integrated boards 3 are mounted on the mechanical arm 2.

Optionally, the driver controller integrated board 3 is mounted on the arm body 21 controlled by the driver controller integrated board 3; or the driver controller integrated board 3 is mounted on an arm body 21 adjacent to the arm body 21 controlled by the driver controller integrated board 3. One driver controller integrated board 3 is disposed on each arm body 21, and the driver controller integrated board 3 controls the arm body 21 where the drive controller integrated board 3 is located or an arm body 21 adjacent to the arm body 21 where the driver controller integrated board 3 is located. This design can simplify the connection structure between all the driver controller integrated boards 3 and multiple arm bodies 21 and improve the reliability of signal transmission.

In this embodiment, the robot further includes the base 1, and the mechanical arm 2 is movably mounted on the base 1.

Optionally, any driver controller integrated board 3 can act as a master control board, and any driver controller integrated board 3 is configured to control the signals from all the driver controller integrated boards 3 and is connected to the external device signal.

Optionally, all the driver controller integrated boards 3 are connected in cascade. For example, the control modules 31 of all the driver controller integrated boards are connected in cascade.

### Embodiment seven

This embodiment differs from embodiment six in the aspects described below.

As shown in FIG. 3, the control module 31 includes the first control part 311 and the second control part 312, where the first control part 311 and the first communication module 34 are disposed on the first side of the substrate 33, and the second control part 312 and the drive module 32 are disposed on the second side of the substrate 33.

Optionally, the first control part 311 is electrically connected to the second control part 312, and the first control part 311 and/or the second control part 312 are electrically connected to the drive module 32.

Optionally, the in-board heat sink is disposed between the first side and the second side of the substrate 33 and is capable of dissipating heat from the first control part 311, the second control part 312, the drive module 32, and the first communication module 34. The in-board heat sink includes the cooling fin 35 supporting the first side and the second side and the cooling fan 36 disposed at the circumference, where the cooling fan 36 can improve the airflow speed inside the cooling fin 35, thereby improving the heat dissipation effect.

### Embodiment eight

This embodiment differs from embodiment six in the aspects described below.

As shown in FIG. 4, at least one driver controller integrated board 3 is mounted on the base 1. Optionally, the driver controller integrated board 3 mounted on the base 1 is the master control board, and the driver controller integrated board 3 mounted on the base 1 is configured to control the signals from all the driver controller integrated boards 3 and is connected to the external device signal.

### Embodiment nine

This embodiment differs from embodiment six in the aspects described below.

All the driver controller integrated boards 3 are connected to a cloud controller, where the cloud controller is configured to control the signals from all the driver controller integrated boards 3 and is connected to the external device signal. That is, none of the driver controller integrated board 3 in this embodiment needs to be used as the master control board, and the cloud controller is used as the master control center of the robot to achieve the overall control of the robot. This design can improve the efficiency of interaction between the arm bodies 21 of different robots and improve the efficiency and flexibility of linked operations of different robots.

### Embodiment ten

This embodiment differs from embodiment six in the aspects described below.

The robot further includes the connecting plate 4, where the connecting plate 4 is configured to control the signals from all the driver controller integrated boards 3 and is connected to the external device signal. As shown in FIG. 5, the connecting plate 4 includes the control part 41 and the mounting plate 42, the control part 41 is disposed on the mounting plate 42, and each driver controller integrated board 3 is electrically connected to the control part 41. The control part 41 electrically connected to each driver controller integrated board 3 is provided. Therefore, on the one hand, the total control of all the driver controller integrated boards 3 can be achieved, the signal interaction between different driver controller integrated boards 3 can be coordinated, and the control system of the robot can form a comprehensive and reliable control of the actuating part; on the other hand, the driver controller integrated board 3 can use the control part 41 as the unified external linkage control interface, thereby simplifying the overall control logic and reducing the overall design difficulty.

Optionally, the connecting plate 4 is mounted on the base 1.

In this embodiment, the connecting plate 4 further includes the second communication module 43, where the second communication module 43 is disposed on the mounting plate 42, and the control part 41 is electrically connected to the second communication module 43. The second communication module 43 is configured to be connected to the network. The second communication module 43 is connected to the network in a wired or wireless manner. The second communication module 43 can achieve remote interaction between the control part 41 and the external device, thereby improving the efficiency of interconnection between the control system of the robot and the external device.

Optionally, the robot further includes the connecting seat 5, where the connecting seat 5 includes the first cascade socket 51 for the driver controller integrated board 3 to be plugged in and the second cascade socket 52 for the connecting plate 4 to be plugged in, and the second cascade socket 52 is electrically connected to the first cascade socket 51. The connecting seat 5 with the first cascade socket 51 and the second cascade socket 52 is provided. Therefore, on the one hand, the installation reliability of the driver controller integrated board 3 and the connecting plate 4 can be improved; on the other hand, the quick assembly and disassembly of the driver controller integrated board 3, the connecting plate 4, and the connecting seat 5 can be facilitated, thereby improving the convenience and flexibility of using different driver controller integrated boards 3 and the connecting plate 4 in combination.

### Embodiment eleven

A robot is shown in FIGS. 1 and 6 (FIG. 1 is only a SCARA robot; in fact, this art is not limited to robots of the shape, structure, or model shown in FIG. 1, nor is it limited to the category of SCARA robots; this art may also be other categories of robots, such as a variety of shapes, structures, and models of a two-shaft robot, a three-shaft robot, a four-shaft robot, a five-shaft robot, a six-shaft robot, a multi-shaft robot, and a Delta robot and is applicable to a variety of shapes, structures, and models of the two-shaft robot, three-shaft robot, four-shaft robot, five-shaft robot, six-shaft robot, multi-shaft robot, and Delta robot). The robot includes the mechanical arm 2 and at least one driver controller integrated board 3. At least one of the at least one driver controller integrated board 3 is disposed on the mechanical arm 2. The driver controller integrated board 3 includes a first substrate 37 and a second substrate 38. The first substrate 37 is a control function board. The second substrate 38 is a drive function board. The first substrate 37 is electrically connected to the second substrate 38. Part of the driver controller integrated board 3 is disposed on the mechanical arm 2. Therefore, firstly, the control devices of the robot are scattered, thereby avoiding localized overheating of the robot, ensuring the reliable operation of the robot, and improving the service life of the robot; secondly, the number of electronic devices to be accommodated in the base 1 of the robot can be reduced, the volume of the base 1 is smaller, and the robot can fit into smaller spaces; thirdly, the connection between multiple drive structures of the mechanical arm 2 and the driver controller integrated board 3 can be simplified.

Optionally, the driver controller integrated board 3 further comprises the first communication module, where the first communication module is electrically connected to the first substrate 37. The first communication module is mounted on the first substrate 37 or the second substrate 38, the first communication module is configured to be connected to the network, and the first communication module is connected to the network in a wired or wireless manner.

Optionally, the driver controller integrated board 3 further includes an I/O interface, where the I/O interface is electrically connected to the first substrate 37 and/or the second substrate 38. The I/O interface is mounted on the first substrate 37.

Optionally, the driver controller integrated board 3 further includes a heat sink, where the heat sink fits the first substrate 37 or the second substrate 38.

In this embodiment, the mechanical arm 2 includes multiple arm bodies 21, more than two driver controller integrated boards 3 are provided, and each driver controller integrated board 3 controls at least one arm body 21. Optionally, one driver controller integrated board 3 controls one arm body 21.

Optionally, all the driver controller integrated boards 3 are mounted on the mechanical arm 2.

Optionally, the driver controller integrated board 3 is mounted on the arm body 21 controlled by the driver controller integrated board 3; or the driver controller integrated board 3 is mounted on an arm body 21 adjacent to the arm body 21 controlled by the driver controller integrated board 3.

In this embodiment, the robot further includes the base 1, and the mechanical arm 2 is movably mounted on the base 1.

Optionally, any driver controller integrated board 3 can act as a master control board, and any driver controller integrated board 3 is configured to control the signals from all the driver controller integrated boards 3 and is connected to the external device signal.

### Embodiment twelve

This embodiment differs from embodiment eleven in the aspects described below.

At least one driver controller integrated board is mounted on the base. Optionally, the driver controller integrated board mounted on the base is the master control board, and the driver controller integrated board mounted on the base is configured to control the signals from all the driver controller integrated boards and is connected to the external device signal.

### Embodiment thirteen

This embodiment differs from embodiment eleven in the aspects described below.

All the driver controller integrated boards are configured to be connected to a cloud controller, where the cloud controller is configured to control the signals from all the driver controller integrated boards and is connected to the external device signal. That is, none of the driver controller integrated board in this embodiment needs to be used as the master control board, and the cloud controller is used as the master control center of the robot to achieve the overall control of the robot. This design can improve the efficiency of interaction between the arm bodies of different robots and improve the efficiency and flexibility of linked operations of different robots.

### Embodiment fourteen

This embodiment differs from embodiment eleven in the aspects described below.

The robot further includes the connecting plate, where the connecting plate is configured to control the signals from all the driver controller integrated boards and is connected to the external device signal. The connecting plate includes the control part and the mounting plate, the control part is disposed on the mounting plate, and each driver controller integrated board is electrically connected to the control part. The control part electrically connected to the driver controller integrated board is provided. Therefore, on the one hand, the total control of all the driver controller integrated boards can be achieved, the signal interaction between different driver controller integrated boards can be coordinated, and the control system of the robot can form a comprehensive and reliable control of the actuating part; on the other hand, the driver controller integrated board can use the control part as the unified external linkage control interface, thereby simplifying the overall control logic and reducing the overall design difficulty.

Optionally, the connecting plate is mounted on the base.

In this embodiment, the connecting plate further includes the second communication module, where the second communication module is disposed on the mounting plate, and the control part is electrically connected to the second communication module. The second communication module is configured to be connected to the network. The second communication module is connected to the network in a wired or wireless manner. The second communication module can achieve remote interaction between the control part and the external device, thereby improving the efficiency of interconnection between the control system of the robot and the external device.

Optionally, the robot further includes the connecting seat, where the connecting seat includes the first cascade socket for the driver controller integrated board to be plugged in and the second cascade socket for the connecting plate to be plugged in, and the second cascade socket is electrically connected to the first cascade socket. The connecting seat with the first cascade socket and the second cascade socket is provided. Therefore, on the one hand, the installation reliability of the driver controller integrated board and the connecting plate can be improved; on the other hand, the quick assembly and disassembly of the driver controller integrated board, the connecting plate, and the connecting seat can be facilitated, thereby improving the convenience and flexibility of using different driver controller integrated boards and the connecting plate in combination.

### Embodiment fifteen

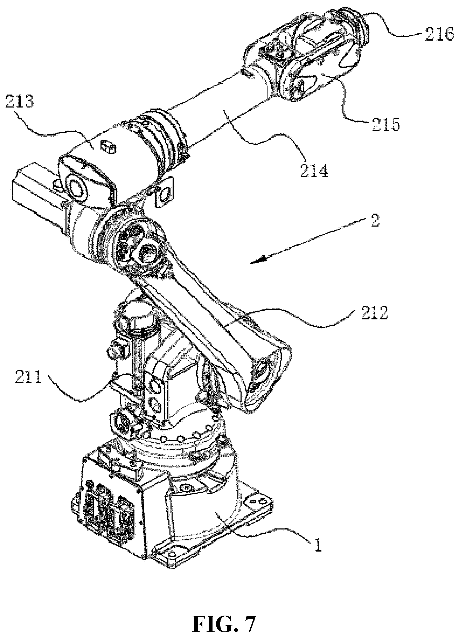

A robot is shown in FIGS. 7 and 2. The robot includes the base 1 and the mechanical arm 2. The mechanical arm 2 includes six sequentially movably connected arm bodies, which are separately a first shaft 211, a second shaft 212, a third shaft 213, a fourth shaft 214, a fifth shaft 215, and a sixth shaft 216, and the first shaft 211 is movably connected to the base 1. The robot further includes the driver controller integrated board 3. The driver controller integrated board 3 is configured to control the mechanical arm 2 to move. The driver controller integrated board 3 includes the control module 31, the drive module 32, and the substrate 33. The control module 31 and the drive module 32 are disposed on the substrate 33. The control module 31 is electrically connected to the drive module 32. In this embodiment, the driver controller integrated boards 3 are disposed in the base 1 and the third shaft 213, the driver controller integrated board 3 located on the base 1 controls the first shaft 211 and the second shaft 212 to move, and the driver controller integrated board 3 located in the third axis 213 controls the third shaft 213, the fourth shaft 214, the fifth shaft 215, and the sixth shaft 216 to move; or the driver controller integrated board 3 located on the base 1 controls the first shaft 211, the second shaft 212, and the third shaft 213 to move, and the driver controller integrated board 3 located in the third axis 213 controls the fourth shaft 214, the fifth shaft 215, and the sixth shaft 216 to move. On the one hand, the preceding design enables the control devices of the robot to be scattered on the base 1 and the mechanical arm 2 to avoid too high a temperature of the base 1 to affect the normal operation and service life of the robot. On the other hand, the control devices on the fourth shaft 214, the fifth shaft 215, and the sixth shaft 216 are placed in front of the third shaft 213, so as to make the fourth shaft 214, the fifth shaft 215, and the sixth shaft 216 lighter, thereby ensuring the fast and reliable movement of the arm body at the rear end.

Optionally, the driver controller integrated board 3 further comprises the first communication module 34, where the first communication module 34 is electrically connected to the control module 31. The first communication module 34 is provided, thereby achieving the remote connection between the control module 31 and the external device and the interaction between different driver controller integrated boards 3, and improving the use flexibility and applicability of the driver controller integrated board 3. The first communication module 34 is mounted on the substrate 33, the first communication module 34 is configured to be connected to the network, and the first communication module 34 is connected to the network in a wired or wireless manner.

Optionally, the driver controller integrated board 3 further includes an I/O interface, where the I/O interface is electrically connected to the control module 31 and/or the drive module 32, and the I/O interface is mounted on the substrate 33.

### Embodiment sixteen

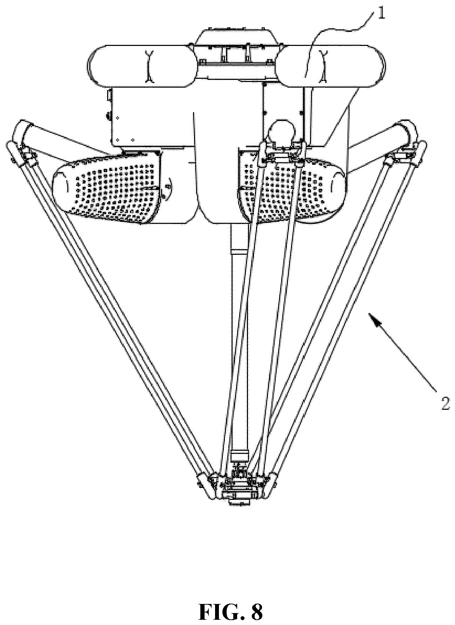

A robot is shown in FIGS. 8 and 2. The robot includes the driver controller integrated board 3 and the arm body 21, the driver controller integrated board 3 includes the control module 31, the drive module 32, and the substrate 33, the control module 31 and the drive module 32 are disposed on the substrate 33, the control module 31 is electrically connected to the drive module 32, and the driver controller integrated board 3 is disposed on the arm body 21. The driver controller integrated board 3 is disposed on the arm body 21. Therefore, firstly, control devices of the robot are scattered, thereby avoiding localized overheating of the robot, ensuring the reliable operation of the robot, and improving the service life of the robot; secondly, the number of electronic devices to be accommodated in the base 1 of the robot can be reduced, the volume of the base 1 is smaller, and the robot can fit into smaller spaces; thirdly, the connection between multiple drive structures of the arm body 21 and the driver controller integrated board 3 can be simplified. The arm body 21 on which the driver controller integrated board 3 is disposed can form a standard arm structure with a control function, so as to quickly switch the arms in the mechanical arm 2. This design has a high degree of ease of use and versatility.

In this embodiment, the robot includes the mechanical arm 2, and the mechanical arm 2 includes at least one arm body 21. Optionally, the mechanical arm 2 further includes an arm on which the driver controller integrated board 3 is not disposed, that is, the mechanical arm 2 consists of the arm body 21 with the driver controller integrated board 3 and the arm without the driver controller integrated board 3, and the driver controller integrated board 3 can control the arm body 21 and the arm. Of course, in some embodiments, the mechanical arm 2 may consist of only the arm body 21 and does not include any other arms. In this case, the driver controller integrated board 3 is disposed on each arm body 21. Therefore, each arm body 21 can control the each arm body.

Optionally, the driver controller integrated board 3 further comprises the first communication module 34, where the first communication module 34 is electrically connected to the control module 31. The first communication module 34 is provided, thereby achieving the remote connection between the control module 31 and the external device and the interaction between different driver controller integrated boards 3, and improving the use flexibility and applicability of the driver controller integrated board 3. Optionally, the first communication module 34 is mounted on the substrate 33. The first communication module 34 is located between the control module 31 and the drive module 32, and the first communication module 34 is disposed near the control module 31.

Optionally, the first communication module 34 is configured to be connected to the network. The first communication module 34 is connected to the network in a wired or wireless manner.

Optionally, the driver controller integrated board 3 further includes an I/O interface, where the I/O interface is electrically connected to the control module 31 and/or the drive module 32, and the I/O interface is mounted on the substrate 33.

Optionally, the driver controller integrated board 3 further includes a heat sink, where the heat sink fits the substrate 33.

In this embodiment, the robot further includes the base 1, and the mechanical arm 2 is movably mounted on the base 1.

Optionally, any driver controller integrated board 3 can act as a master control board, and any driver controller integrated board 3 is configured to control the signals from all the driver controller integrated boards 3 and is connected to the external device signal.

In the description here, it is to be understood that orientations or position relations indicated by terms such as "upper", "lower", "left", and "right" are based on the drawings. These orientations or position relations are intended only to facilitate description and simplify operations and not to indicate or imply that a device or element referred to must have such particular orientations or must be configured or operated in such particular orientations. Thus, these orientations or position relations are not to be construed as limiting the present application. In addition, the terms "first" and "second" are used only to distinguish between descriptions and have no special meaning.

In the description of the specification, the description of reference terms "an embodiment" or "example" means that specific characteristics, structures, materials, or features described in connection with the embodiment or example are included in at least one embodiment or example of the present application. In the specification, the illustrative description of the preceding terms does not necessarily refer to the same embodiment or example.

## Claims

1. A robot, comprising:
a driver controller integrated board comprising a control module, a drive module, and a substrate, wherein the control module and the drive module are disposed on the substrate, and the control module is electrically connected to the drive module; and
an arm body, wherein the driver controller integrated board is disposed on the arm body.

2. The robot of claim 1, wherein at least one arm body is provided, the robot comprises a mechanical arm, and the mechanical arm comprises all the at least one arm body.

3. The robot of claim 1, wherein the driver controller integrated board further comprises a first communication module, wherein the first communication module is electrically connected to the control module.

4. The robot of claim 3, wherein the first communication module is configured to be connected to a network.

5. The robot of claim 4, wherein the first communication module is connected to the network in a wired or wireless manner.

6. The robot of claim 1, wherein the driver controller integrated board further comprises an input/output (I/O) interface, wherein the I/O interface is electrically connected to at least one of the control module or the drive module.

7. The robot of claim 1, wherein the driver controller integrated board further comprises a heat sink, wherein the heat sink fits the substrate.

8. The robot of claim 2, further comprising a base, wherein the mechanical arm is movably mounted on the base.

9. The robot of claim 8, further comprising a driver controller integrated board disposed on the base.

10. The robot of claim 9, wherein the driver controller integrated board mounted on the base is a master control board, and the driver controller integrated board mounted on the base is configured to control signals from all driver controller integrated boards and is connected to an external device signal.

11. The robot of claim 2, wherein any driver controller integrated board is capable of acting as a master control board, is configured to control signals from all driver controller integrated boards and is connected to an external device signal; or
all driver controller integrated boards are configured to be connected to a cloud controller, wherein the cloud controller is configured to control signals from all the driver controller integrated boards and is connected to an external device signal.

12. The robot of claim 2, further comprising a connecting plate, wherein the connecting plate is configured to control signals from all driver controller integrated boards and is connected to an external device signal, the connecting plate comprises a control part and a mounting plate, the control part is disposed on the mounting plate, and each driver controller integrated board is electrically connected to the control part.

13. The robot of claim 12, wherein the connecting plate further comprises a second communication module, wherein the second communication module is disposed on the mounting plate, and the control part is electrically connected to the second communication module.

14. The robot of claim 13, wherein the second communication module is configured to be connected to a network.

15. The robot of claim 14, wherein the second communication module is connected to the network in a wired or wireless manner.

16. A robot, comprising:
a mechanical arm; and
at least one driver controller integrated board, wherein at least one of all the at least one driver controller integrated board is disposed on the mechanical arm, each driver controller integrated board comprises a control module, a drive module, and a substrate, the control module and the drive module are disposed on the substrate, and the control module is electrically connected to the drive module.

17. The robot of claim 16, wherein the each driver controller integrated board further comprises a first communication module, wherein the first communication module is electrically connected to the control module.

18. The robot of claim 17, wherein the first communication module is configured to be connected to a network.

19. The robot of claim 18, wherein the first communication module is connected to the network in a wired or wireless manner.

20. The robot of claim 16, wherein the each driver controller integrated board further comprises an input/output (I/O) interface, wherein the I/O interface is electrically connected to at least one of the control module or the drive module.

21. The robot of claim 16, wherein the each driver controller integrated board further comprises a heat sink, wherein the heat sink fits the substrate.

22. The robot of any one of claims 16 to 21, wherein the mechanical arm comprises a plurality of arm bodies, at least two driver controller integrated boards are provided, and each of the at least two driver controller integrated boards controls at least one of the plurality of arm bodies.

23. The robot of claim 22, wherein one of the at least two driver controller integrated boards controls one of the plurality of arm bodies.

24. The robot of claim 23, wherein each driver controller integrated board is mounted on one of the plurality of arm bodies controlled by the each driver controller integrated board; or each driver controller integrated board is mounted on an arm body adjacent to one of the plurality of arm bodies controlled by the each driver controller integrated board.

25. The robot of claim 22, further comprising a base, wherein the mechanical arm is movably mounted on the base.

26. The robot of claim 25, wherein at least one of all the at least two driver controller integrated boards is mounted on the base.

27. The robot of claim 26, wherein one of the at least one driver controller integrated board mounted on the base is a master control board, and the one driver controller integrated board is configured to control signals from all the at least two driver controller integrated boards and is connected to an external device signal.

28. The robot of claim 22, wherein any of the at least two driver controller integrated boards is capable of acting as a master control board, and the any of the at least two driver controller integrated boards is configured to control signals from all the at least two driver controller integrated boards and is connected to an external device signal; or
all the at least two driver controller integrated boards are configured to be connected to a cloud controller, wherein the cloud controller is configured to control signals from all the at least two driver controller integrated boards and is connected to an external device signal.

29. The robot of claim 22, further comprising a connecting plate, wherein the connecting plate is configured to control signals from all the at least two driver controller integrated boards and is connected to an external device signal, the connecting plate comprises a control part and a mounting plate, the control part is disposed on the mounting plate, and each of the at least two driver controller integrated boards is electrically connected to the control part.

30. The robot of claim 29, wherein the connecting plate further comprises a second communication module, wherein the second communication module is disposed on the mounting plate, and the control part is electrically connected to the second communication module.

31. The robot of claim 30, wherein the second communication module is configured to be connected to a network.

32. The robot of claim 31, wherein the second communication module is connected to the network in a wired or wireless manner.

33. A robot, comprising:
a mechanical arm; and
at least one driver controller integrated board, wherein at least one of all the at least one driver controller integrated board is disposed on the mechanical arm, each driver controller integrated board comprises a first substrate and a second substrate that are integrally provided, the first substrate is a control function board, the second substrate is a drive function board, and the first substrate is electrically connected to the second substrate.

34. The robot of claim 33, wherein each driver controller integrated board further comprises a first communication module, wherein the first communication module is electrically connected to the first substrate.

35. The robot of claim 34, wherein the first communication module is configured to be connected to a network.

36. The robot of claim 35, wherein the first communication module is connected to the network in a wired or wireless manner.

37. The robot of claim 33, wherein each driver controller integrated board further comprises an input/output (I/O) interface, wherein the I/O interface is electrically connected to at least one of the first substrate or the second substrate.

38. The robot of claim 33, wherein each driver controller integrated board further comprises a heat sink, wherein the heat sink fits the first substrate or the second substrate.

39. The robot of any one of claims 33 to 38, wherein the mechanical arm comprises a plurality of arm bodies, at least two driver controller integrated boards are provided, and each of the at least two driver controller integrated boards controls at least one of the plurality of arm bodies.

40. The robot of claim 39, wherein one of the at least two driver controller integrated boards controls one of the plurality of arm bodies.

41. The robot of claim 40, wherein each driver controller integrated board is mounted on one of the plurality of arm bodies controlled by the each driver controller integrated board; or each driver controller integrated board is mounted on an arm body adjacent to one of the plurality of arm bodies controlled by the each driver controller integrated board.

42. The robot of claim 39, further comprising a base, wherein the mechanical arm is movably mounted on the base.

43. The robot of claim 42, wherein at least one of all the at least two driver controller integrated boards is mounted on the base.

44. The robot of claim 43, wherein each driver controller integrated board mounted on the base is a master control board, and the each driver controller integrated board mounted on the base is configured to control signals from all the at least two driver controller integrated boards and is connected to an external device signal.

45. The robot of claim 39, wherein any of the at least two driver controller integrated boards is capable of acting as a master control board, and the any of the at least two driver controller integrated boards is configured to control signals from all the at least two driver controller integrated boards and is connected to an external device signal; or
all the at least two driver controller integrated boards are configured to be connected to a cloud controller, wherein the cloud controller is configured to control signals from all the at least two driver controller integrated boards and is connected to an external device signal.

46. The robot of claim 39, further comprising a connecting plate, wherein the connecting plate is configured to control signals from all the at least two driver controller integrated boards and is connected to an external device signal, the connecting plate comprises a control part and a mounting plate, the control part is disposed on the mounting plate, and each of the at least two driver controller integrated boards is electrically connected to the control part.

47. The robot of claim 46, wherein the connecting plate further comprises a second communication module, wherein the second communication module is disposed on the mounting plate, and the control part is electrically connected to the second communication module.

48. The robot of claim 47, wherein the second communication module is configured to be connected to a network.

49. The robot of claim 48, wherein the second communication module is connected to the network in a wired or wireless manner.
